# EUROPÄISCHE PATENTSCHRIFT

(11) **EP 1 430 486 B1**
(45) Veröffentlichungstag und Bekanntmachung des Hinweises auf die Patenterteilung: **31.10.2007**
(21) Anmeldenummer: 02776747.4
(22) Anmeldetag: 24.09.2002
(51) Int. Cl.: G12B 21/08, G12B 21/22

(54) **VERFAHREN UND VORRICHTUNG ZUM MESSEN EINER PROBE MIT HILFE EINES RASTERSONDENMIKROSKOPS**
METHOD AND DEVICE FOR ANALYSING A SAMPLE BY MEANS OF A RASTER SCANNING PROBE MICROSCOPE
PROCEDE ET DISPOSITIF POUR MESURER UN ECHANTILLON AVEC UN MICROSCOPE-SONDE A BALAYAGE

(30) Priorität: 24.09.2001 DE 10147868
(43) Veröffentlichungstag der Anmeldung: 23.06.2004
(73) Patentinhaber: JPK Instruments AG, 12435 Berlin (DE)
(72) Erfinder: KAMPS, Jörn, 14163 Berlin (DE)
(74) Vertreter: Bittner, Thomas L.
(86) Internationale Anmeldenummer: PCT/DE2002/003690
(87) Internationale Veröffentlichungsnummer: WO 2003/028038

(56) Entgegenhaltungen:
- EP-A- 0 564 088
- US-A- 5 616 916
- US-A- 6 032 518
- WERF VAN DER K O ET AL: "COMPACT STAND-ALONE ATOMIC FORCE MICROSCOPE" REVIEW OF SCIENTIFIC INSTRUMENTS, AMERICAN INSTITUTE OF PHYSICS. NEW YORK, US, Bd. 64, Nr. 10, 1. Oktober 1993 (1993-10-01), Seiten 2892-2897, XP000400486 ISSN: 0034-6748

## Beschreibung

Die Erfindung liegt auf dem Gebiet von Verfahren und Vorrichtungen für die Rastersondenmikroskopie (SPM - "Scanning Probe Microscope").

Eine Form der Rastersondenmikroskopie ist die Rasterkraftmikroskopie (SFM - "Scanning Force Microscope", AFM - Atomic Force Microscopy). Ein wichtiges Anwendungsgebiet der Rastersondenmikroskopie ist die Bestimmung einer Topographie einer Oberfläche einer untersuchten Probe mit hoher lateraler und vertikaler Auflösung. Der Begriff "laterale Auflösung" bezeichnet hierbei die Auflösung in einer Ebene der zu untersuchenden Oberfläche. Die zu dieser Ebene senkrechte Richtung wird als vertikale Richtung bezeichnet. In Richtung der vertikalen Richtung wird die Topographie der Oberfläche mit einer vertikalen Auflösung bestimmt. Neben der Topologie können auch andere Eigenschaften einer zu untersuchenden Probe gemessen werden, beispielsweise die Elastizität oder Adhäsionskräfte. Zur Klasse der Rastersondenmikroskope gehören weiterhin optische Nahfeldmikroskope (SNOM - "Scanning Near Field Microscope").

Um Rastersondenmikroskopie betreiben zu können, muß der Abstand zwischen einer Meßsonde und der zu untersuchenden Probe sehr genau einstellbar und meßbar sein. Als Meßsonde werden in Verbindung mit Rastersondenmikroskopen beispielsweise Meßbalken verwendet, die als Cantilever bezeichnet werden. Speziell in Rasterkraftmikroskopen wird als Meßparameter eine Kraft zwischen dem Cantilever und der zu untersuchenden Probe ausgewertet, wobei die Kraft im einfachsten Fall mit einem Lenard-Jones Potential beschrieben werden kann. Mehrere Möglichkeiten können genutzt werden, um die Kraft zu detektieren. Im einfachsten Fall wird eine Auslenkung der Meßsonde, welche im Fall des Cantilevers bei der Rasterkraftmikroskopie in der Regel als ein dünner Federbalken ausgebildet ist, detektiert. Es existieren jedoch auch Meßverfahren, bei denen der Cantilever zum Schwingen angeregt wird. Die Dämpfung der Amplitude der angeregten Schwingung wird dann geregelt. Den bekannten Meßverfahren ist gemeinsam, daß eine Wechselwirkung zwischen dem Cantilever und der zu untersuchenden Probe gemessen wird. Der Begriff "Rastersondenmikroskopie" in der hier genutzten Bedeutung umfaßt all diese Meßverfahren bzw. die jeweils genutzten Mikroskope.

Bei einem bekannten Meßverfahren wird die Kraft, welche auf den Cantilever wirkt, mit Hilfe eines Lichtzeigerprinzips detektiert. Hierbei wird ein Meßlichtstrahl, insbesondere ein Laserstrahl auf den Cantilever gerichtet, wobei eine Fokusierung vorgesehen sein kann. In Abhängigkeit von einer Verbiegung des Cantilevers wird der Meßlichtstrahl an dem Cantilever oder einem mit dem Cantilever verbundenen Bauteil in einem bestimmten Winkel zur Einfallslichtrichtung reflektiert. Der reflektierte Lichtstrahl wird dann auf eine Photodiode gelenkt, die eine Empfängerfläche mit mindestens zwei Segmente aufweist. Ein Unterschied des empfangenen Lichtsignals für beide Segmente zeigt an, daß der Meßlichtstrahl von einer Mittelposition zwischen den beiden Segmenten entfernt ist. Die Mittelposition ist so definiert, daß der reflektierte Meßlichtstrahl zu gleichen Teilen auf beide Segmente fällt. Ein Verbiegung des Cantilevers führt dazu, daß die Gleichverteilung des reflektierten Meßlichtstrahls über beide Segmente geändert wird. Soll zusätzlich eine Torsion des Cantilevers detektiert werden, so kann eine Photodiode mit vier Segmenten genutzt werden, mit der eine Positionsbestimmung des reflektierten Meßlichtstrahls auf der Photodiode in zwei Richtungen möglich ist. Aus der Messung einer Verbiegung des Cantilevers kann bei Kenntnis einer Federkonstante des Cantilevers die Kraft zwischen dem Cantilever und der zu messenden Probe bestimmt werden.

Der Cantilever kann bei einem Rastersondenmikroskop zum Beispiel aus Silizium sein. Es können jedoch auch Materialien wie SiN₃ oder Diamant verwendet werden. Grundsätzlich ist das Meßverfahren nach dem Lichtzeigerprinzip unabhängig von dem Material, aus dem der Cantilever bzw. die Meßspitze gebildet ist.

Beim Abtasten der zu messenden Probe mit Hilfe des Cantilevers muß üblicherweise der Abstand zwischen Probe und Cantilever in vertikaler Richtung mit Hilfe einer Relativbewegung von Probe und Cantilever zueinander exakt eingestellt werden. Hierdurch kann beispielsweise ein konstantes Kraftverhältnis eingestellt werden. Zum Einstellen des Abstands können beispielsweise piezoelektrische Bauteile verwendet werden. Gleichzeitig wird bei der Messung eine rasterartige Bewegung des Cantilevers in lateraler Richtung relativ zur Probe ausgeführt. Grundsätzlich kann entweder die Probe oder der Cantilever bewegt werden. Wenn der Cantilever bewegt wird, spricht man von einem "Stand-alone"-Rastersondenmikroskop. Es ist jedoch auch möglich, den Cantilever lateral und die zu messende Probe vertikal oder umgekehrt zu bewegen.

In Verbindung mit "Stand-alone"-Rastersondenmikroskopen sind gegenwärtig zwei Ansätze zur Implementierung des Lichtzeigerprinzips bekannt. Bei einer Art der Implementierung werden alle Komponenten des Lichtzeigers in allen drei Raumrichtungen mitbewegt. Der Lichtzeiger ist dann unabhängig von der Bewegung des Cantilevers und zeigt lediglich eine Verbiegung desselben an. Nachteil dieser Implementierung ist es, daß für eine Justierung der Lichtquelle, welche die Meßlichtstrahlen erzeugt, verschiedene Verstelleinrichtungen vorgesehen werden müssen. Die gesamte Masse des hieraus resultierenden mechanischen Aufbaus muß mitbewegt werden, und eine mechanische Resonanzfrequenz des Meßsystems wird insbesondere auch in der vertikalen Richtung stark erniedrigt. Der mechanische Aufbau bei dieser Implementierung muß insgesamt auf engem Raum realisiert werden.

Bei einer zweiten Art der Implementierung wird lediglich der Cantilever in allen drei Raumrichtungen bewegt. In diesem Fall müssen jedoch Maßnahmen getroffen werden, die sicherstellen, daß die Meßlichtstrahlen auch bei der Bewegung des Cantilevers diesen nach wie vor treffen, um dann reflektiert zu werden. Insbesondere bei Messungen, die ein Abtasten von großen Bereichen mit dem Cantilever erfordern, ist ohne eine laterale Nachführung der Meßlichtstrahlen eine Abbildung des reflektierten Meßlichts auf die Photodiode unmöglich. Es wurden verschiedene Möglichkeiten für die Nachführung des Meßlichts vorgeschlagen. Mit Hilfe dieser Methoden gelingt es, daß sich die Intensität der reflektierten Meßlichtstrahlen bei der Bewegung des Cantilevers nicht oder nur geringfügig verändert. Sofern sich der Cantilever nicht verbiegt, ist das erhaltende Photodiodensignal aufgrund der reflektierten Meßlichtstrahlen vollständig oder nahezu konstant. Ein Nachteil dieser Vorgehensweise besteht jedoch darin, daß beim lateralen Nachführen der Meßlichtstrahlen nicht gleichzeitig eine Korrektur eines ebenfalls vorhandenen vertikalen Meßfehlers durchgeführt werden kann. Ein vertikaler Meßfehler entsteht dann, wenn der Cantilever nicht senkrecht zur Einfallsrichtung der Meßlichtstrahlen ausgerichtet ist, sondern leicht geneigt ist.

Aus dem Dokument US 5,616,916 ist ein Rastersondenmikroskop bekannt. Zum Messen einer Meßprobe ist eine in lateraler und vertikaler Richtung verlagerbare Meßsonde vorgesehen. Mit Hilfe einer Lichtquelle werden Meßlichtstrahlen erzeugt und auf die Meßsonde gerichtet. Die Meßlichtstrahlen werden an der Meßsonde mit Hilfe einer Reflexionseinrichtung reflektiert und anschließend detektiert.

Auch im Dokument US 6,032,518 ist ein Rastersondenmikroskop beschrieben. In einer Ausführungsform ist vorgesehen, einen Konvergenzpunkt, in welchem an der Meßsonde reflektierte Meßlichtstrahlen sich schneiden, mit Hilfe einer Abbildungslinse auf einen anderen Ort abzubilden.

Aufgabe der Erfindung ist es, ein verbessertes Verfahren und eine verbesserte Vorrichtung für ein Rastersondenmikroskop anzugeben, bei dem (der) eine verbesserte Korrektur von Meßwertverfälschungen erreicht wird.

Diese Aufgabe wird erfindungsgemäß durch ein Verfahren nach dem unabhängigen Anspruch 1 und eine Vorrichtung nach dem unabhängigen Anspruch 7 gelöst.

Die Erfindung umfaßt den wesentlichen Gedanken, beim Messen einer Probe mit Hilfe eines Rastersondenmikroskopes, bei dem das Lichtzeigerprinzip verwendet wird, die Elemente des Lichtzeigers so an eine laterale Verlagerungseinheit zu koppeln, daß der Lichtzeiger als Ganzes lateral verlagert wird, wenn die Meßsonde relativ zu der zu untersuchenden Meßprobe in lateraler Richtung bewegt wird. Dieses führt dazu, daß die Elemente des Lichtzeigers relativ zueinander in Ruhe gehalten werden. In vertikaler Richtung ist hingegen eine Relativbewegung einer von dem Lichtzeiger umfaßten Reflexionseinrichtung an der Meßsonde zu den übrigen Elementen des Lichtzeigers erlaubt, insbesondere der Lichtquelle zum Erzeugen von Meßlichtstrahlen und der Empfängereinrichtung, mit der reflektierte Meßlichtstrahlen zum Erzeugen eines Meßsignals erfaßt werden, die beim Reflektieren der Meßlichtstrahlen an der Reflexionseinrichtung erzeugt werden. Bei einem solchen Meßaufbau des Lichtzeigers führt eine vertikale Verlagerung der Meßsonde und damit der Reflexionseinrichtung relativ zu den weiteren Elementen des Lichtzeigers zu einem Parallelversatz der reflektierten Meßlichtstrahlen. Um sicherzustellen, daß hierdurch kein Meßwertverfälschung eintritt, ist die Nutzung einer Korrekturlinse vorgesehen, mit der die reflektierten Meßlichtstrahlen auf eine Empfängerfläche der Empfängereinrichtung fokussiert werden. Die Korrekturlinse ist in einem Abstand von der Empfängerfläche angeordnet, welcher im wesentlichen gleich der Fokuslänge der Korrekturlinse ist. Der Abstand der Korrekturlinse zu der Empfängerfläche muß innerhalb bestimmter Fehlergrenzen liegen, die innerhalb solcher Vorrichtungen üblicherweise auflösbar sind, deren absoluter Wert von dem Maß für die Fokuslänge abhängt. Beträgt die Fokuslänge beispielsweise einige Millimeter oder wenige Zentimeter, so kann der Abstand dann auch um einige Mikrometer vom exakten Wert der Fokuslänge abweichen, sofern diese überhaupt mit einer solchen Genauigkeit eingestellt werden kann. Wesentlich ist, daß die reflektierten Meßlichtstrahlen im Rahmen der Genauigkeit der jeweiligen Messung trotz Parallelversatz in den gleichen Bereich auf der Empfängerfläche fokussiert werden. Dieses bedeutet, daß eine Relativbewegung der Meßsonde bzw. der hieran angeordneten Reflexionseinrichtung relativ zu der Lichtquelle und der Empfängereinrichtung nicht zu Meßwertverfälschungen führt, da mit Hilfe der Korrekturlinse eine Korrektur ausgeführt wird.

Eine zweckmäßige Weiterbildung des erfindungsgemäßen Verfahrens sieht vor, daß die Meßlichtstrahlen mit Hilfe optischer Umlenkmittel auf die Reflexionseinrichtung gelenkt werden. Hierdurch kann für den Weg der Meßlichtstrahlen von der Lichtquelle zu der Reflexionseinrichtung in Abhängigkeit von der jeweils gewählten Meßanordnung ein optimierter Meßlichtstrahlenweg gestaltet werden. Insbesondere kann vorgesehen sein, daß die Meßlichtstrahlen in einem Abschnitt ihres Weges unmittelbar vor der Reflexionseinrichtung im wesentlichen mittig zu der Meßanordnung verlaufen.

Um auch die reflektierten Meßlichtstrahlen nach deren Erzeugung an der Reflexionseinrichtung in Abhängigkeit vom Anwendungsfall in optimierter Weise auf die Empfängerfläche der Empfängereinrichtung lenken zu können, kann bei einer Ausgestaltung der Erfindung vorgesehen sein, daß die reflektierten Meßlichtstrahlen mit Hilfe weiterer optischer Umlenkmittel auf die Empfängerfläche gelenkt werden.

Ein optimierter Lichteinfall der Meßlichtstrahlen auf die Reflexionseinrichtung an der Meßsonde und von zusätzlicher Kondensorbeleuchtung auf einen Bereich, in dem die Meßsonde oberhalb der Meßprobe angeordnet ist, kann bei einer bevorzugten Fortbildung der Erfindung dadurch erreicht werden, daß die Meßlichtstrahlen auf einem Lichtweg von der Lichtquelle zur Reflexionseinrichtung zumindest teilweise entlang eines Kondensorlichtwegs geführt werden. Der Kondensorlichtweg kann so zusätzlich zur Ausbreitung des Kondensorlichts für eine Übertragung der Meßlichtstrahlen genutzt werden.

Meßwertverfälschungen sind bei einer zweckmäßigen Ausführungsform der Erfindung dadurch minimiert, daß für einen Einfallswinkel der Meßlichtstrahlen zu einer Normalen der Reflexionseinrichtung ein Wert von etwa ≤ 30 Grad gewählt wird.

Um die Meßprobe während der rastersondersondenmikroskopischen Untersuchung zeitgleich mit einem Lichmikroskop betrachten zu können, sieht eine bevorzugte Weiterbildung der Erfindung vor, daß die Meßprobe mit einem Kondensorlicht beleuchtet wird, welches sich durch einen Kondensorlichtweg ausbreitet.

Die in abhängigen Ansprüchen zu der Vorrichtung zum Messen einer Meßprobe mit Hilfe eines Rastersondenmikroskops genannten Merkmale weisen die in Verbindung mit den zugehörigen Verfahrensansprüchen genannten Vorteile entsprechend auf.

Die Erfindung wird im folgenden anhand von Ausführungsbeispielen näher erläutert. Hierbei zeigen:
- Figur 1: eine schematische Darstellung einer Meßanordnung für ein Rastersondenmikroskop mit einem Durchlichtmikroskop;
- Figur 2: eine schematische Darstellung der Meßanordnung nach Figur 1 mit einem Auflichtmikroskop; und
- Figur 3: eine schematische Darstellung einer weiteren Meßanordnung für ein Rastersondenmikroskop mit einer Korrekturlinseneinrichtung.

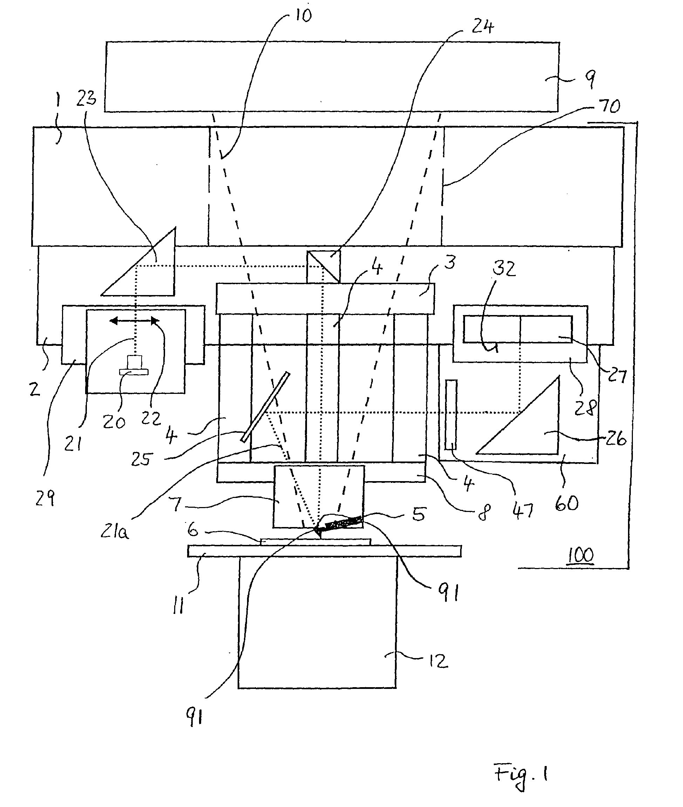

Figur 1 zeigt eine schematische Darstellung einer Meßanordnung 100 für ein Rastersondenmikroskop, insbesondere ein Rasterkraftmikroskop mit einer lateralen Verlagerungseinheit 1, welche eine exakte Bewegung der mit der lateralen Verlagerungseinheit 1 verbundenen weiteren Bauteile in einer Ebene ermöglicht, die senkrecht zur Zeichenebene in Figur 1 verläuft. Die laterale Verlagergungseinheit 1 kann beispielsweise mit Hilfe von piezoelektrischen Bauelementen gebildet sein. Grundsätzlich können jedoch beliebige Arten von Vorrichtungen genutzt werden, die eine exakte Verlagerung in einer Ebene ermöglichen. An der lateralen Verlagerungseinheit ist ein Rahmenbauteil 2 montiert. An dem Rahmenbauteil 2 sind weitere Bauteile der in Figur 1 dargestellten Anordnung für ein Rastersondenmikroskop derart befestigt, daß sie mit Hilfe der lateralen Verlagerungseinheit 1 in lateraler Richtung bewegt werden können.

An dem Rahmenbauteil 2 wird eine Glasplatte 3 gehalten. An der Glasplatte 3 sind mehrere vertikale Verlagerungseinheiten 4 angebracht, die vorzugsweise als piezoelektrische Bauteile ausgebildet sind. Die vertikalen Verlagerungseinheiten 4 sind so angeordnet, daß sie nicht oder zumindest nicht in störender Art und Weise in den Kondensorlichtweg 10 hinein reichen. Um eine hohe Stabilität zu gewährleisten, sind die vertikalen Verlagerungseinheiten 4 aber möglichst nahe an dem Kondensorlichtweg 10 angeordnet.

Mit Hilfe der vertikalen Verlagerungseinheit 4 kann eine zum Ausführen der rastersondenmikroskopischen Untersuchungen vorgesehene Meßsonde 5, bei der es sich im Fall des Rasterkraftmikroskops um einen sogenannten Cantilever handelt, in einer vertikalen Richtung, die senkrecht zu der lateralen Verlagerungsebene verläuft, exakt positioniert werden. Dieses ist notwendig, um den Abstand der Meßsonde 5 zu einer Probe 6 mit hoher Präzision einzustellen und zu messen. Die Meßsonde 5 ist an einen Glaskörper 7 montiert, welcher über ein Ringbauteil 8 an die mehreren lateralen Verlagerungseinheiten 4 gekoppelt ist. Damit die Meßanordnung 100 auch für eine Verwendung unter Flüssigkeiten geeignet ist, muß es einen definierten Übergang von der Luft zum Wasser geben. Dieser wird mit Hilfe des Glaskörpers 7 vermittelt, dessen Größe wiederum so gestaltet sein ist, daß die Kondensorlichtweg 10 nicht behindert ist. Der Glaskörper 7 weist vorteilhaft eine Nut auf, die einen zur Probenebene geneigten Einbau der Meßsonde 5 erlaubt.

Oberhalb der Meßanordnung 100 ist über der lateralen Verlagerungseinheit 1 ist eine Kondensorbeleuchtung 9 vorgesehen, welche Kondensorlicht erzeugt. In Figur 1 ist ein Kondensorlichtweg 10 kegelförmig ausgebildet, was mit Hilfe gestrichelter Linien dargestellt ist. Der Kondensorlichtweg 10 verläuft im wesentlichen mittig durch die laterale Verlagerungseinheit 1, die zu diesem Zweck eine Öffnung 70 aufweist, die Glasplatte 3, das Ringbauteil 8 sowie den Glaskörper 7 hindurch, um die auf einem Probenträger 11 angeordnete Probe 6 zu beleuchten. Bei dem Probenträger 11 kann es sich beispielsweise um einen kommerziell verfügbaren Objektträger oder eine Petrischale handeln. Die Kondensorbeleuchtung 9 dient zur Untersuchung der Probe 6 mit Hilfe eines Objektivs 12, das unterhalb des Probenträgers 11 angeordnet ist.

Die in Figur 1 dargestellt Ausführung der Meßanordnung 100 für ein Rastersondenmikroskop ermöglicht somit eine Beleuchtung der Probe 6 mit Kondensorlicht, auch wenn die Probe 6 auf dem Probenträger 11 für eine rastersondenmikroskopische Untersuchung angeordnet ist. Das Kondensorlicht kann sich in üblicher Weise, beispielsweise kegelförmig entlang des Kondensorlichtwegs 10 ausbreiten. Die im Bereich des Kondensorlichtwegs 10 angeordneten Bauteile der Anordnung nach Figur 1 weisen zur Vermeidung einer Behinderung der Lichtausbreitung des Kondensorlichts beispielsweise Öffnungen auf, durch die das Kondensorlicht gelangen kann, oder sind aus einem lichttransparenten Material gebildet, wie beispielsweise die Glasplatte 3 und der Glaskörper 7. Auf dem Weg von der Kondensorbeleuchtung 9 zu der Probe 6 ist keine Umlenkung des Kondensorlichts mit Hilfe zusätzlicher optischer Bauelemente notwendig. Solche optischen Umlenkungen führen in der Regel zu einer verminderten Qualität der Ausleuchtung der Probe 6 für die lichtmikroskopische Untersuchung mit Hilfe des Objektivs 12.

Mittels der in Figur 1 dargestellten Meßanordnung 100 kann die Probe 6 rastersondenmikroskopisch untersucht werden. Zu diesem Zweck erzeugt eine vorzugsweise als Laser ausgebildete Lichtquelle 20 Meßlichtstrahlen 21, die über eine Fokusierlinse 22, ein Prisma 23 sowie einen Strahlteiler 24 auf die Meßsonde 5 geleitet werden. Der Stahlteiler 24 ist in seiner Größe und in seinem Abstand zur Meßprobe 6 so gewählt, daß Phasenringe des Lichts von der Kondensorbeleuchtung 9, die den Phasenkontrast ermöglichen, entweder außen am Strahlteiler 24 vorbeigehen oder vollständig durch den Strahlteiler 24 hindurch verläuft. Damit das Licht des Kondensorbeleuchgtung 9 außerhalb des Strahlteilers 24 vollständig ungestört seitlich an diesem vorbeigehen kann, ist der Halter (d.h. die Glasplatte 3) des Strahlteilers 24 aus Glas oder einem anderen transparenten Material gefertigt. Eine andere Befestigung, beispielsweise mit einem Metallrahmen könnte vorgesehen sein, würde aber den Kondensorlichtweg 10 erheblich stören.

Gemäß dem Lichtzeigerprinzip werden die auf die Meßsonde 5 einfallenden Meßlichtstrahlen 21 reflektiert und als reflektierte Meßlichtstrahlen 21 a über einen Umlenkspiegel 25 und ein weiteres Prisma 26 auf eine Photodiode 27 gelenkt. Die Photodiode 27 weist zweckmäßig eine Empfängerfläche 32 mit zwei Segmenten auf. In Abhängigkeit von der Verbiegung der Meßsonde 5 ändert sich die Verteilung der reflektierten Meßlichtstrahlen 21a zwischen den beiden Segmenten der Empfängerfläche der Photodiode 27. Die im Bereich der beiden Segmente erzeugten Signale sind ein Maß für die Verbiegung der Meßsonde 5, wobei die Verbiegung der Meßsonde 5 wiederum Folge einer Wechselwirkung der Meßsonde 5 mit der Probe 6 ist. Es handelt sich hierbei um das übliche in Rastersondenmikroskopen, insbesondere Rasterkraftmikroskopen genutzte Lichtzeiger-Meßprinzip, welches deshalb nicht weiter ausgeführt wird.

Die Photodiode 27 ist mit Hilfe einer Verstelleinheit 28 an dem Rahmenbauteil 2 montiert. In ähnlicher Weise sind die Lichtquelle 20 und die Fokusierlinse 22 mit Hilfe einer weiteren Verstelleinheit 29 an dem Rahmenbauteil 2 befestigt.

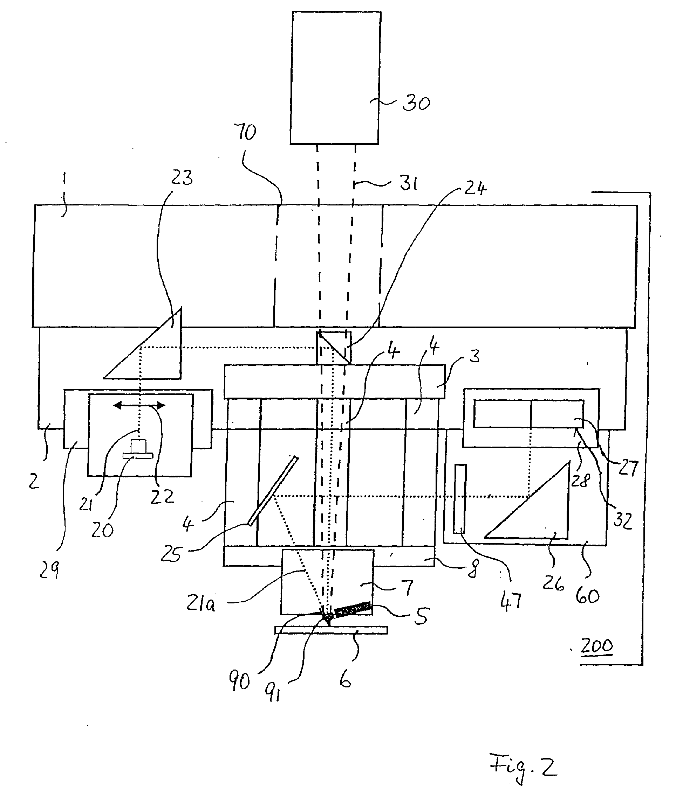

Figur 2 zeigt eine schematische Darstellung, bei der eine Meßanordnung 200 für ein Rastersondenmikroskop mit den gleichen Merkmalen wie in Figur 1 dargestellt ist. Im Unterschied zu der Ausführungsform nach Figur 1 ist für eine lichtmikroskopische Untersuchung der Probe 6 jedoch ein Auflichtmikroskop 30 vorgesehen. Mit Hilfe des Auflichtmikroskops 30 wird Licht gesammelt, das sich von der Meßprobe 6 kommend entlang eines Kondensorlichtwegs 31, welcher im Querschnitt im wesentlichen kegelschnittförmig ausgebildet ist, durch die Meßanordnung 200 für die rastersondenmikroskopische Untersuchung hindurch zu dem Auflichtmikroskop 30 ausbreitet. Wie bei der Ausführungsform nach Figur 1 verläuft der Kondensorlichtweg 31, welcher insbesondere hinsichtlich eines Durchmessers ausreichend groß gestaltet ist, so daß sich das Licht von einem Kondensor (in Figur 2 nicht dargestellt) durch ihn ausbreiten kann, und welcher beim Untersuchen der Meßprobe 6 mit dem Auflichtmikroskop 30 als eine Art Beobachtungskanal bzw. allgemeiner Lichtkanal genutzt wird, durch den sich Licht von der Meßprobe 6 zu dem Auflichtmikroskop 30 ausbreiten kann, im wesentlichen mittig zu der in Figur 2 gezeigten Meßanordnung 200. Die mit Hilfe der Lichtquelle 20 erzeugten Meßlichtstrahlen 21 verlaufen nach der Umlenkung mit Hilfe des Strahlteilers 24 innerhalb des Kondensorlichtwegs 31 und im wesentlichen parallel zum Kondensorlicht 31, wie dieses auch bei der Ausführungsform nach Figur 1 der Fall ist.

Aufgrund der Ausbildung des Kondensorlichtwegs 10 bzw. 31 ist die Gesamtbauhöhe der Meßanordnung 100 bzw. 200 beschränkt. Gegenwärtig liegen die größten Arbeitsabstände für kommerziell erhältliche Kondensoren im Bereich von etwa 70mm. Naturgemäß nehmen die oben beschriebenen Verlagerungseinheiten 1 bzw. 4 schon einen Teil der Bauhöhe ein. Hieraus ergibt sich die Forderung, daß die Elemente, die zum Messen mittels des Lichtzeigerprinzips verwendet werden, mit einer geringen Bauhöhe auskommen müssen, wenn man die Forderung nach einem kompakten Design der Meßanordnung 100 bzw. 200 einhalten will.

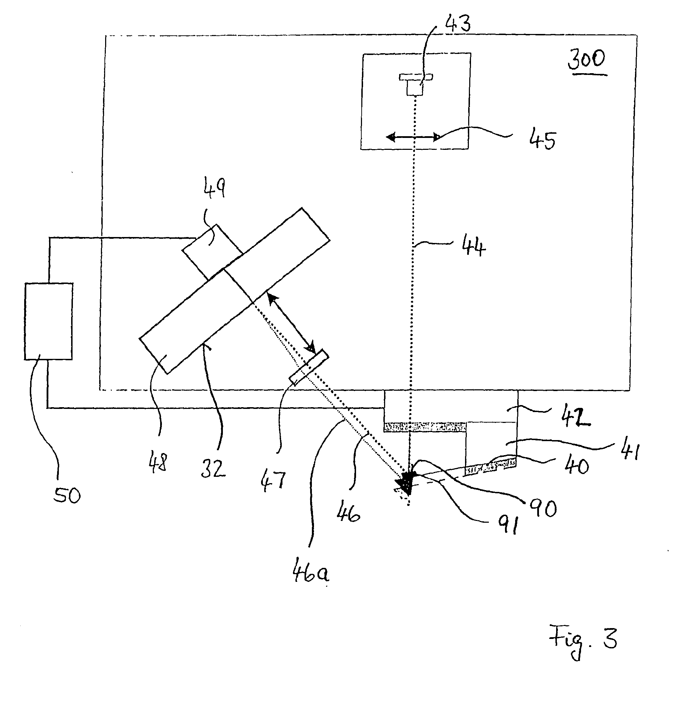

Zum Ausbilden des Kondensorlichtwegs 10 bzw. 31 sind einige Bauteile oberhalb der Meßprobe 6 und der Meßsonde 5 transparent gestaltet. Hieraus und aus dem "Stand-alone"-Prinzip ergeben sich starke Einschränkungen für den Verlauf der Meßlichtstrahlen 21 und der reflektierten Meßlichtstrahlen 21 a. Die Elemente des Lichtzeigers, nämlich insbesondere die Lichtquelle 20, die Fokusierlinse 25, die weitere Verstelleinheit 29, das Prisma 23, der Strahlteiler 24 sowie der Umlenkspiegel 25, das weitere Prisma 26, eine Korrekturlinse 47, die Verstelleinheit 28, die Photodiode 27 und die Meßsonde 5 bzw. ein an der Meßsonde 5 befestigte Reflexionselement 91 zum Reflektieren der einfallenden Meßlichtstrahlen 21, sind mit der lateralen Verstelleinheit 1 mechanisch verbunden und werden von der lateralen Verstelleinheit 1 zusammen bewegt, was dazu führt, daß sich diese Elemente beim Abtasten der Meßprobe 6 relativ zueinander in Ruhe befinden. Hierdurch entfällt die Notwendigkeit für eine Nachführung der Meßlichtstrahlen 21 auf der Meßsonde 5. Es können somit die im Stand der Technik vorgesehenen Korrektureinheiten eingespart werden, die darüber hinaus eine Lichtausbreitung entlang des Kondensorlichtwegs 10 bzw. 31 stören können. In vertikaler Richtung wird hingegen von den Elementen des Lichtzeigers nur die Meßsonde 5 bzw. das an der Meßsonde 5 befestigte Reflexionselement 91 zum Reflektieren der einfallenden Meßlichtstrahlen 21 mit Hilfe der vertikalen Verlagerungseinheit 4 verlagert. Diese Verlagerung der Meßsonde 5 führt zu einer Relativbewegung der Meßsonde 5 zu den übrigen Elementen des Lichtzeigers. Eine hierfür vorgesehene Korrektur wird unten unter Bezugnahme auf Figur 3 im Detail beschrieben.

Für den Verlauf der an der Meßsonde 5 reflektierten Meßlichtstrahlen ergeben sich prinzipiell zwei Möglichkeiten, um den Kondensorlichtweg 10 bzw. 31 nicht zu behindern. Eine Möglichkeit besteht darin, die Meßsonde 5 parallel zur Ebene der Meßprobe 6 auszurichten und die reflektieren Meßlichtstrahlen auf dem Einfallsweg wieder zurück zu leiten. Außerhalb des Bereichs des Kondensorlichtwegs 10 bzw. 31 kann dann eine Trennung der beiden Strahlengänge, d.h. der auf die Meßsonde 5 einfallenden Meßlichtstrahlen und der an der Meßsonde 5 reflektierten Meßlichtstrahlen, stattfinden und die reflektierten Meßlichtstrahlen auf die Photodiode gelenkt werden. Eine Trennung kann z.B. mittels einer Polarisationsunterscheidung stattfinden. Ein Nachteil dieser Vorgehensweise besteht darin, daß es eher schwierig ist, die Meßsonde 5 derart zu befestigen, daß ihre Spitze der tiefste Punkt der Meßanordnung 100 bzw. 200 ist. Dies ist insbesondere dann schwierig, wenn Meßproben mit sehr rauhen Oberflächen analysiert werden sollen. Es besteht zwar die Möglichkeit, die Meßsonde 5, beispielsweise einen Cantilever-Chip anzukleben; diese Lösung erfordert aber wieder eine aufwendige Loslösung von der Halterung, beispielsweise beim Austausch der Meßsonde 5. Es könnte auch vorgesehen sein, den Cantilever-Chip über einen dünnen flüssigen Film anzuheften; diese Vorgehensweise ist jedoch nicht sehr sicher.

Um den Kondensorlichtweg 10 bzw. 31 nicht zu beeinträchtigen, besteht alternativ die Möglichkeit, die Meßsonde 5 geneigt zur Meßprobe 6 einzubauen, so daß die reflektierten Meßlichtstrahlen 21 a weit genug aus dem Kondensorlichtweg 10 bzw. 31 abgelenkt werden (vg1. Figuren 1 und 2), was dazu führt, daß keine weiteren Bauteile, z.B. die Photodiode 27, den Kondensorlichtweg 10 bzw. 31 stören. Hierbei kann eine zu starke Verkippung der Meßsonde 5 jedoch dazu führen, daß möglicherweise Probleme auftreten, da eine Meßwertverfälschung durch die Spitzengeometrie der Meßsonde 5 immer wahrscheinlicher wird. Es zeigt sich zudem, daß eine kleine lokale Störung des Strahlengangs in dem Kondensorlichtweg 10 bzw. 31 nicht zu einem relevanten Verlust in der Auflösung des optischen Bildes führt, so daß im derzeit bevorzugten Ausführungsbeispiel die Meßsonde 5 nur leicht verkippt wird und eine Auskopplung der reflektierten Meßlichtstrahlen 21a mittels des Umlenkspiegels 25 erfolgt, der nur in geringem Maß in den Kondensorlichtweg 10 bzw. 31 eingreift.

Durch die neuartige Anordnung der Elemente des Lichtzeigers ergibt sich zusätzlich ein Vorteil gegenüber bekannten Verfahren zur Korrektur der Meßlichtstrahlen bei Messungen nach dem Lichtzeigerprinzip mit "Stand-alone"-Rastersondenmikroskopen. Es entfällt eine Korrektur in lateraler Richtung, da alle Baugruppen des Lichtzeigers lateral zusammen bewegt werden und deshalb relativ zueinander in Ruhe sind. Es muß aber noch eine Korrektur von Meßwertverfälschungen vorgesehen werden, die durch eine vertikale Bewegung der Meßsonde 5 relativ zu den übrigen Elementen des Lichtzeigers hervorgerufen werden. Die hierdurch entstehende Meßwertverfälschung beruht auf einem Parallelversatz der reflektieren Meßlichtstrahlen 21 a in Abhängigkeit von der vertikalen Auslenkung der Meßsonde 5.

Figur 3 zeigt eine schematische Darstellung einer Lichtzeigervorrichtung 300 für ein "Stand-alone"-Rastersondenmikroskop, insbesondere ein Rasterkraftmikroskop. Gemäß Figur 3 ist eine Meßsonde 40 über eine Befestigungseinheit 41 mit einer vertikalen in z-Richtung verlaufenden Verstelleinheit 42 verbunden. Beim Ausführen einer Messung nach dem Lichtzeigerprinzip wird die Lichtzeigervorrichtung 300, welche bei der Ausführung nach Figur 3 die Lichtquelle 43, eine Fokussierlinse 45, die Korrekturlinse 47 sowie die Photodiode 48 mit ihrer Beschaltung 49 umfaßt, lateral als Gesamteinheit zusammen mit der Meßsonde 40 sowie der Befestigungseinheit 41 und der vertikalen Verstelleinrichtung 42 bewegt. Zu diesem Zweck sind die Lichtquelle 43, eine Fokussierlinse 45, die Korrekturlinse 47, die Photodiode 48 und deren Beschaltung 49 mit der lateralen Verstelleinheit (in Figur 3 nicht dargestellt) des Rastersondenmikroskops mechanisch verbunden, wie dieses bereits für die Ausführungsformen in den Figuren 1 und 2 beschrieben wurde, welche ebenfalls den im Folgenden erläuterten Korrekturmechanismus mittels der Korrekturlinse 47 aufweisen. Wesentlich ist, daß alle Baugruppen des Lichtzeigers, einschließlich der Meßsonde in lateraler Richtung gemeinsam verschoben werden können und in vertikaler Richtung die Meßsonde relativ zu den übrigen Baugruppen verlagerbar ist. Die hierbei potentiell entstehenden Meßfehler werden korrigiert, was im folgenden Abschnitt näher erläutert wird.

Ein mit Hilfe einer Lichtquelle 43 erzeugter Meßlichtstrahl 44, der nach dem Verlassen der Lichtquelle 43 zunächst eine Fokusierlinse 45 passiert, trifft auf die Meßsonde 40 und wird auf einer Reflexionsfläche 90 einer Reflexionseinrichtung 91, beispielsweise einem Spiegel, reflektiert, so daß ein reflektiertet Meßlichtstrahl 46 entsteht, der über eine Korrekturlinse 47 auf eine Photodiode 48 gelangt. Die Korrekturlinse 47 ist in den Figuren 1 bis 3 mit dem gleichen Bezugszeichen versehen. Die Photodiode 48 weist eine elektronische Beschaltung 49 auf, welche dazu dient, die mit Hilfe der Photodiode 48 empfangenen Meßsignale zu verarbeiten. Über die elektronische Beschaltung 49 ist die Photodiode 48 an eine Regeleinrichtung 50 gekoppelt, die ihrerseits eine Verbindung zu der vertikalen Verstelleinrichtung 42 aufweist. Mit Hilfe der Regeleinrichtung 50 wird eine Regelgröße in Abhängigkeit von den mit der Photodiode 48 empfangenen Meßsignalen erzeugt, um die vertikale Verstelleinrichtung 42 nachzuregeln. Auf diese Weise wird die Meßsonde 40 vertikal in z-Richtung verlagert, was in Figur 3 mittels gestrichelter Linien dargestellt ist.

Die vertikale Verlagerung der Meßsonde 40 mit Hilfe der Verstelleinrichtung 42 hat eine Relativbewegung der Meßsonde 40 zu weiteren Elementen des Lichtzeigers zur Folge. Nach der Verlagerung wird ein geänderter reflektierter Meßlichtstrahl 46a, der zum reflektierten Meßlichtstrahl 46 parallel verschoben ist, auf die Korrekturlinse 47 gegeben. Mit Hilfe der Korrekturlinse 47 wird der geänderte reflektierte Meßlichtstrahl 46a jedoch in den gleichen Bereich der Empfängerfläche der Photodiode 48 wie der reflektierte Meßlichtstrahl 46 gerichtet. Um dieses zu erreichen, ist die Korrekturlinse 47 in einem Abstand 51 von der Empfängerfläche der Photodiode 48 angeordnet, die der Fokuslänge der Korrekturlinse 47 entspricht. Die Korrekturlinse 47 korrigiert somit die oben beschriebenen Meßwertverfälschungen aufgrund einer Bewegung der Meßsonde 40 in vertikaler Richtung bzw. z-Richtung und kann deshalb auch als z-Korrekturlinse bezeichnet werden.

Bei den Ausführungsformen nach den Figuren 1 und 2 wird eine Relativbewegung der Meßsonde 5 zu weiteren Elementen des Lichtzeigers durch eine Betätigung der vertikalen Verlagerungseinheit 4 verursacht, da von den Elementen des Lichtzeigers nur die Meßsonde 5 mit der vertikalen Verlagerungseinheit verlagerbar ist. Die Korrektur von hierdurch entstehenden Meßwertfehlern wird mittels der Korrekturlinse 47 erreicht, deren Abstand von der Empfängerfläche 32 der Photodiode der Brennweite der Korrekturlinse 47 entspricht, so daß eventuell parallel versetzte reflektierte Meßlichtstrahlen 21 a des Meßergebnis nicht verfälschen. Demgegenüber sind insbesondere die Korrekturlinse 47 und das Prisma 26, mit denen die reflektierten die Meßlichtstrahlen 21a auf die Photodiode 27 gelenkt werden, mit Hilfe einer Befestigungseinheit 60 an die laterale Verlagerungseinheit 1 gekoppelt, so daß sie gemeinsam mit der Photodiode 27 und den übrigen Elementen des Lichtzeiger bewegt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Messen einer Meßprobe mit Hilfe eines Rastersondenmikroskops, insbesondere eines Rasterkraftmikroskops, bei dem:
- zum Messen einer Meßprobe (6) eine Meßsonde (5; 40) mit Hilfe einer lateralen und einer vertikalen Verlagerungseinheit (1) relativ zu der Meßprobe (6) verlagert wird,
- Meßlichtstrahlen (21; 44) mit Hilfe einer Lichtquelle (20; 43) erzeugt und auf eine an der Meßsonde angeordnete Reflexionseinrichtung (91) gelenkt werden, und
- die Meßlichtstrahlen (21; 44) an der Reflexionseinrichtung (91) reflektiert werden, so daß reflektierte Meßlichtstrahlen (21 a; 46; 46a) gebildet werden,
wobei bei einer lateralen Verlagerung der Meßsonde (5; 40) relativ zur Meßprobe (6) die Lichtquelle (20; 43), die Reflexionseinrichtung (91) und die Empfängereinrichtung (27; 48) entlang einer lateralen Richtung mitbewegt werden, so daß die Reflexionseinrichtung (91) zu der Lichtquelle (20; 43) und der Empfängereinrichtung (27; 48) relativ in Ruhe gehalten wird, und bei einer vertikalen Verlagerung der Meßsonde (5; 40) relativ zur Meßprobe (6) die Reflexionseinrichtung (91) relativ zu der Lichtquelle (20; 43) und der Empfängereinrichtung (27; 48) entlang einer vertikalen Richtung bewegt wird, **dadurch gekennzeichnet, daß** die reflektierten Meßlichtstrahlen (21 a; 46; 46a) zum Erzeugen eines Meßsignals mit Hilfe einer Korrekturlinse (47) auf eine Empfängerfläche (32) einer Empfängereinrichtung (27; 48) gelenkt werden, wobei die Korrekturlinse (47) in einem Abstand, welcher im wesentlichen gleich einer Fokuslänge der Korrekturlinse (47) ist, von der Empfängerfläche (32) angeordnet ist.

2. Verfahren nach Anspruch 1, wobei die Meßlichtstrahlen (21a; 46; 46a) mit Hilfe optischer Umlenkmittel (22, 23, 24) auf die Reflexionseinrichtung (91) gelenkt werden.

3. Verfahren nach Anspruch 1 oder 2, wobei die reflektierten Meßlichtstrahlen (21a) mit Hilfe weiterer optischer Umlenkmittel (25, 26) auf die Empfängerfläche (32) gelenkt werden.

4. Verfahren nach einem der vorangehenden Ansprüche, wobei die Meßlichtstrahlen (21) auf einem Lichtweg von der Lichtquelle (20) zu der Reflexionseinrichtung (91) zumindest teilweise entlang eines Kondensorlichtwegs (10; 31) geführt werden.

5. Verfahren nach einem der vorangehenden Ansprüche, wobei für einen Einfallswinkel der Meßlichtstrahlen (21; 44) zu einer Normalen einer Reflexionsfläche (90) der Reflexionseinrichtung (91) ein Wert von etwa ≤ 30 Grad gewählt wird.

6. Verfahren nach einem der vorangehenden Ansprüche, wobei die Meßprobe (6) mit einem Kondensorlicht beleuchtet wird, welches sich durch einen Kondensorlichtweg (10; 31) ausbreitet.

7. Vorrichtung zum Messen einer Meßprobe mit Hilfe eines Rastersondenmikroskops, insbesondere eines Rasterkraftmikroskops, mit:
- einer lateralen Verlagerungseinheit (1), welche beim Messen einer Meßprobe (6) zum lateralen Verlagern einer Meßsonde (5; 40) relativ zu der Meßprobe (6) nutzbar ist,
- einer vertikalen Verlagerungseinheit (4), welche beim Messen der Meßprobe (6) zum vertikalen Verlagern der Meßsonde (5; 40) relativ zu der Meßprobe (6) nutzbar ist,
- einer Lichtquelle (20; 43) zum Erzeugen von Meßlichtstrahlen (21; 44), die entlang eines Lichtwegs auf eine an der Meßsonde (5; 40) angeordnete Reflexionseinrichtung (91) gelenkt und an der Reflexionseinrichtung (91) reflektiert werden können, so daß reflektierte Meßlichtstrahlen (21a; 46; 46a) gebildet sind, und
- einer Empfängereinrichtung (27; 48) mit einer Empfängerfläche (32) zum Erzeugen eines Meßsignals, wenn die reflektierten Meßlichtstrahlen (21 a; 46; 46a) auf die Empfängerfläche (32) fallen,
wobei die Lichtquelle (20; 43), die Reflexionseinrichtung (91) und die Empfängereinrichtung (27; 48) so an die laterale Verlagerungseinheit gekoppelt sind, daß sie bei einer lateralen Verlagerung der Meßsonde (5; 40) relativ zur Meßprobe (6) entlang einer lateralen Richtung mitbewegt werden, so daß die Reflexionseinrichtung (91) zu der Lichtquelle (20; 43) und der Empfängereinrichtung (27; 48) relativ in Ruhe gehalten wird, und wobei die Reflexionseinrichtung (91) so an die vertikale Verlagerungseinheit gekoppelt ist, daß sie relativ zu der Lichtquelle (20; 43) und der Empfängereinrichtung (27; 48) bei einer vertikalen Verlagerung der Meßsonde (5; 40) relativ zur Meßprobe (6) entlang einer vertikalen Richtung bewegt wird, **gekennzeichnet durch** eine Korrekturlinse (47) zum Fokussieren der reflektierten Meßlichtstrahlen (21 a; 46; 46a) auf die Empfängerfläche (32), wobei die Korrekturlinse (47) in einem Abstand, welcher im wesentlichen gleich einer Fokuslänge der Korrekturlinse (47) ist, von der Empfängerfläche (32) angeordnet ist.

8. Vorrichtung nach Anspruch 7, wobei optische Umlenkmittel (23, 24) zum Lenken der Meßlichtstrahlen (21; 44) auf die Reflexionseinrichtung (91) vorgesehen sind.

9. Vorrichtung nach Anspruch 7 oder 8, wobei weitere optische Umlenkmittel (25, 26) zum Lenken der reflektierten Meßlichtstrahlen (21a; 46; 46a) auf die Empfängerfläche (32) der Empfängereinrichtung (27; 48) vorgesehen sind.

10. Vorrichtung nach einem der Ansprüche 7 bis 9, wobei der Lichtweg der Meßlichtstrahlen (21) von der Lichtquelle (20; 43) zur der Reflexionseinrichtung (91) zumindest teilweise entlang eines Kondensorlichtwegs (10; 31) gebildet ist.

11. Vorrichtung nach einem der Ansprüche 7 bis 10, wobei eine Reflexionsfläche (90) der Reflexionseinrichtung (91) zu einer Mittelachse der lateralen Verlagerungseinheit (1) geneigt ist.

## Claims

1. A method of measuring a specimen by means of a scanning probe microscope, especially a scanning force microscope, wherein
- a probe (5; 40) is displaced with respect to a specimen (6) by means of lateral and vertical shifting units (1) to measure the specimen (6);
- measuring light rays (21; 44) are generated by means of a light source (20; 43) and directed to a reflection means (91) disposed on the probe;
- the measuring light rays (21; 44) are reflected at the reflection means (91), whereby reflected measuring light rays (21 a; 46; 46a) are formed;
the light source (20; 43), the reflection means (91), and the detector means (27; 48) being moved along in a lateral direction as the probe (5; 40) is displaced laterally, whereby the reflection means (91) is maintained relatively at rest with respect to the light source (20; 43) and the detector means (27; 48), and the reflection means (91) being moved with respect to the light source (20; 43) and the detector means (27; 48) along a vertical direction as the probe (5; 40) is displaced vertically with respect to the specimen (6), **characterized in that** the reflected measuring light rays (21a; 46; 46a) are directed by means of a correction lens (47) to a detector surface (32) of a detector means (27; 48) to generate a measurement signal, the correction lens (47) being positioned at a distance from the detector surface (32) substantially corresponding to a focal length of the correction lens (47).

2. The method as claimed in claim 1, wherein the measuring light rays (21a; 46, 46a) are directed to the reflection means (91) by means of optical deflection means (22, 23, 24).

3. The method as claimed in claim 1 or 2, wherein the reflected measuring light rays (21a) are directed to the detector surface (32) by means of further optical deflection means (25, 26).

4. The method as claimed in any one of the preceding claims, wherein the measuring light rays (21) in a light path from the light source (20) to the reflection means (91) are guided at least partly along a condenser light path (10; 31).

5. The method as claimed in any one of the preceding claims, wherein a value of about ≤ 30 degrees is chosen for an angle of incidence of the measuring light rays (21; 44) with respect to a normal of a reflection surface (90) of the reflection means (91).

6. The method as claimed in any one of the preceding claims, wherein the specimen (6) is illuminated by condenser light which spreads through a condenser light path (10; 31).

7. An apparatus for measuring a specimen by means of a scanning probe microscope, especially a scanning force microscope, comprising:
- a lateral shifting unit (1) useful during measurement of a specimen (6) for lateral displacement of a probe (5; 40) with respect to the specimen (6);
- a vertical shifting unit (4) useful during measurement of the speciment (6) for vertical displacement of the probe (5; 50) with respect to the specimen (6);
- a light source (20; 43) for generating measuring light rays (21; 44) which may be directed along a light path to a reflection means (91) disposed on the probe (5; 40) and be reflected at the reflection means (91) so that reflected measuring light rays (21a; 46; 46a) are formed;
- a detector means (27; 48) having a detector surface (32) for generating a measurement signal when the reflected measuring light rays (21a; 46; 46a) impinge on the detector surface (332); and
the light source (20; 43), the reflection means (91), and the detector means (27; 48) being coupled to the lateral shifting unit such that they are moved along, upon lateral displacement of the probe (5; 40) with respect the specimen (6), along a lateral direction so that, regarding the light source (20; 43) and the detector means (27; 48), the reflection means (91) is maintained relatively at rest, and the reflection means (91) being coupled to the vertical shifting unit such that it is moved along a vertical direction with respect to the light source (20; 43) and the detector means (27; 48) upon vertical displacement of the probe (5; 40) with respect to the specimen (6), **characterized in that** a correction lens (47) for focussing reflected measuring light rays (21 a; 46; 46a) on the detector surface (32), the correction lens (47) being positioned at a distance from the detector surface (32) substantially corresponding to a focal length of the correction lens (47).

8. The apparatus as claimed in claim 7, wherein optical deflection means (23, 24) are provided to guide the measuring light rays (21; 44) to the reflection means (91).

9. The apparatus as claimed in claim 7 or 8, wherein further optical deflection means (25, 26) are provided to guide the reflected measuring light rays (21 a; 46; 46a) to the detector surface (32) of the detector means (27; 48).

10. The apparatus as claimed in any one of claims 7 to 9, wherein the light path of the measuring light rays (21) from the light source (20; 43) to the reflection means (91) is formed at least partly along a condenser light path (10; 31).

11. The apparatus as claimed in any one of claims 7 to 10, wherein a reflection surface (90) of the reflection means (91) is inclined with respect to the central axis of the lateral shifting unit (1).

## Revendications

1. Procédé de mesure d'un échantillon au moyen d'un microscope-sonde à balayage, en particulier un microscope à force atomique, dans lequel:
- pour mesurer un échantillon (6), une sonde de mesure (5 ; 40) est déplacée par rapport à l'échantillon (6) au moyen d'une unité de déplacement latérale (1) et d'une unité de déplacement verticale,
- des rayons lumineux de mesure (21 ; 44) sont générés au moyen d'une source lumineuse (20 ; 43) et sont dirigés sur un dispositif de réflexion (91) agencé au niveau de la sonde de mesure (5 ; 40), et
- les rayons lumineux de mesure (21 ; 44) sont réfléchis au niveau du dispositif de réflexion (91) de manière à former des rayons lumineux de mesure réfléchis (21a ; 46 ; 46a),
dans lequel, lors d'un déplacement latéral de la sonde de mesure (5 ; 40) par rapport à l'échantillon (6), la source lumineuse (20 ; 43), le dispositif de réflexion (91) et le dispositif de réception (27 ; 48) sont entraînés le long d'une direction latérale, de telle sorte que le dispositif de réflexion (91) est maintenu au repos par rapport à la source lumineuse (20 ; 43) et au dispositif de réception (27 ; 48), et lors d'un déplacement vertical de la sonde de mesure (5 ; 40) par rapport à l'échantillon (6), le dispositif de réflexion (91) est déplacé le long d'une direction verticale par rapport à la source lumineuse (20 ; 43) et au dispositif de réception (27 ; 48),
**caractérisé en ce que** les rayons lumineux de mesure réfléchis (21a ; 46 ; 46a), en vue de générer un signal de mesure, sont dirigés au moyen d'une lentille correctrice (47) sur une surface de réception (32) d'un dispositif de réception (27 ; 48), la lentille correctrice (47) étant située à une distance de la surface de réception (32), qui est sensiblement égale à la longueur focale de la lentille correctrice (47).

2. Procédé selon la revendication 1, dans lequel les rayons lumineux de mesure (21a ; 46 ; 46a) sont dirigés par des moyens de déviation optiques (22, 23, 24) sur le dispositif de réflexion (91).

3. Procédé selon la revendication 1 ou 2, dans lequel les rayons lumineux de mesure réfléchis (21a) sont dirigés par d'autres moyens de déviation optiques (25, 26) sur la surface de réflexion (32).

4. Procédé selon l'une quelconque des revendications précédentes, dans lequel les rayons lumineux de mesure (21) sont guidés sur une trajectoire depuis la source lumineuse (20 ; 43) vers le dispositif de réflexion (91) au moins partiellement le long d'une trajectoire d'une lumière de condenseur (10 ; 31).

5. Procédé selon l'une quelconque des revendications précédentes, dans lequel une valeur ≤ 30 degrés environ est choisie pour un angle d'incidence des rayons lumineux de mesure (21 ; 44) par rapport à une normale d'une surface de réflexion (90) du dispositif de réflexion (91).

6. Procédé selon l'une quelconque des revendications précédentes, dans lequel l'échantillon (6) est éclairé par une lumière de condenseur, qui se propage à travers une trajectoire lumineuse du condenseur (10 ; 31).

7. Dispositif de mesure d'un échantillon au moyen d'un microscope-sonde à balayage, en particulier un microscope à force atomique, comportant :
- une unité de déplacement latérale (1), qui peut être utilisée au cours de la mesure de l'échantillon (6) pour un déplacement latéral d'une sonde de mesure (5 ; 40) par rapport à l'échantillon (6),
- une unité de déplacement verticale (4), qui peut être utilisée au cours de la mesure de l'échantillon (6) pour un déplacement vertical de la sonde de mesure (5 ; 40) par rapport à l'échantillon (6),
- une source lumineuse (20 ; 43) destinée à générer des rayons lumineux de mesure (21 ; 44) qui sont dirigés le long d'une trajectoire lumineuse sur un dispositif de réflexion (91), agencé sur la sonde de mesure (5 ; 40), et qui peuvent être réfléchis au niveau du dispositif de réflexion (91) de manière à former des rayons lumineux de mesure réfléchis (21a ; 46 ; 46a), et
- un dispositif de réception (27 ; 48) comportant une surface de réflexion (32) pour générer un signal de mesure lorsque les rayons lumineux de mesure réfléchis (21a ; 46 ; 46a) rencontrent la surface de réception (32),
la source lumineuse (20 ; 43), le dispositif de réflexion (91) et le dispositif de réception (27 ; 48) étant couplés à l'unité de déplacement latérale de telle sorte que lors d'un déplacement latéral de la sonde de mesure (5 ; 40) par rapport à l'échantillon (6), ils sont entraînés le long d'une direction latérale, de telle sorte que le dispositif de réflexion (91) est maintenu au repos par rapport à la source lumineuse (20 ; 43) et au dispositif de réception (27 ; 48), et le dispositif de réflexion (91) étant couplé à l'unité de déplacement verticale de telle sorte que, lors d'un déplacement vertical de la sonde de mesure (5 ; 40) par rapport à l'échantillon (6), il est déplacé le long d'une direction verticale par rapport à la source lumineuse (20; 43) et au dispositif de réception (27 ; 48),
**caractérisé par** une lentille correctrice (47) destinée à focaliser les rayons lumineux de mesure réfléchis (21a ; 46 ; 46a) sur la surface de réflexion (32), la lentille correctrice (47) étant située à une distance de la surface de réception (32), qui est sensiblement égale à la longueur focale de la lentille correctrice (47).

8. Dispositif selon la revendication 7, dans lequel il est prévu des moyens de déviation optiques (23, 24) pour diriger les rayons lumineux de mesure (21 ; 44) sur le dispositif de réflexion (91).

9. Dispositif selon la revendication 7 ou 8, dans lequel il est prévu d'autres moyens de déviation optiques (25, 26) pour diriger les rayons lumineux de mesure réfléchis (21a ; 46 ; 46a) sur la surface de réflexion (32) du dispositif de réception (27 ; 48).

10. Dispositif selon l'une quelconque des revendications 7 à 9, dans lequel la trajectoire des rayons lumineux de mesure (21) est formée depuis la source lumineuse (20 ; 43) vers le dispositif de réflexion (91) au moins partiellement le long d'une trajectoire d'une lumière de condenseur (10 ; 31).

11. Dispositif selon l'une quelconque des revendications 7 à 10, dans lequel une surface de réflexion (90) du dispositif de réflexion (91) est inclinée par rapport à un axe médian de l'unité de déplacement latéral (1).
